# EUROPÄISCHE PATENTSCHRIFT

(11) **EP 3 391 132 B1**
(45) Veröffentlichungstag und Bekanntmachung des Hinweises auf die Patenterteilung: **02.10.2019**
(21) Anmeldenummer: 16819458.7
(22) Anmeldetag: 12.12.2016
(51) Int. Cl.: G02F 1/1333, G02F 1/13357, G06F 3/041, G06F 3/01

(54) **TOUCHSCREEN MIT EINER HAPTISCHEN RÜCKMELDEVORRICHTUNG**
TOUCHSCREEN HAVING A HAPTIC FEEDBACK DEVICE
ÉCRAN TACTILE DOTÉ D'UN DISPOSITIF DE RETOUR HAPTIQUE

(30) Priorität: 17.12.2015 DE 102015225722
(43) Veröffentlichungstag der Anmeldung: 24.10.2018
(73) Patentinhaber: Continental Automotive GmbH, 30165 Hannover (DE)
(72) Erfinder: WEBER, Markus, 55129 Mainz (DE); BRÜNINGHAUS, Andreas, 51674 Wiehl (DE); WILDNER, Steffen, 64807 Dieburg (DE)
(86) Internationale Anmeldenummer: PCT/EP2016/080581
(87) Internationale Veröffentlichungsnummer: WO 2017/102626

(56) Entgegenhaltungen:
- US-A1- 2008 055 277
- US-A1- 2011 193 802
- US-A1- 2013 278 561

## Beschreibung

Die Erfindung betrifft einen Touchscreen mit einer haptischen Rückmeldevorrichtung. Aus dem Stand der Technik sind derartige Touchscreens bekannt, die eine elektrooptische Anzeige mit einer vor der elektrooptischen Anzeige angeordneten Eingabefläche und einen Träger aufweisen, wie zum Beispiel dargestellt in den Druckschriften US2011193802, US2013278561 und US2008055277. Auf letzterer Druckschrift basiert die Präambel von Anspruch 1. Hierbei ist die elektrooptische Anzeige mit der Eingabefläche mechanisch starr verbunden und relativ zu dem Träger durch einen Motor beweglich ausgestaltet ist. Als elektrooptische Anzeige kann beispielsweise ein Flüssigkristalldisplay oder eine sonstige transmissive Anzeige verwendet werden. Durch die Bewegung der Eingabefläche werden bei einem Benutzer der Eingabefläche, der die Eingabefläche berührt, haptische Rückmeldungen erzeugt. Die Bewegung der Eingabefläche kann beispielsweise in senkrechter oder paralleler Richtung zur Oberfläche der Eingabefläche erfolgen. Es sind aber auch zusammengesetzte Bewegungen aus den beiden vorgenannten Bewegungen möglich. Üblicherweise beträgt die Strecke, die die Eingabefläche relativ zu dem Träger zurückgelegt, weniger als 1 mm bis wenige Millimeter. Die Frequenz der Bewegung kann wenige Hertz bis einige Kilohertz betragen. Die elektrooptische Anzeige ist im Stand der Technik mittels einer Beleuchtungsvorrichtung beleuchtbar, wobei diese Beleuchtungsvorrichtung eine Lichtquelle aufweist. Im Stand der Technik ist es zum einen bekannt, die elektrooptische Anzeige starr mit der Beleuchtungsvorrichtung zu verbinden. Insbesondere bei räumlich größeren Touchscreens ist es erforderlich, die Beleuchtungsvorrichtung entsprechend zu dimensionieren. So wird eine große Lichtmenge benötigt, um den Touchscreen zufriedenstellend beleuchten zu können. Die dafür benötigten Beleuchtungsvorrichtungen weisen nicht zu vernachlässigende Massen auf. Durch diese zusätzlichen Massen wird die mechanische Ausgestaltung der relativ zu dem Träger beweglichen Anzeigefläche und des dafür erforderlichen Motors sehr aufwendig. Deshalb ist es aus dem Stand der Technik auch bekannt, die Eingabefläche im Abstand der elektrooptischen Anzeige anzuordnen und nur die Eingabefläche mittels des Motors zu bewegen. Nachteilig hierbei ist der dabei zwangsläufig vorhandene Luftspalt zwischen der Eingabefläche und der elektrooptischen Anzeige, so dass durch die Übergänge von der Eingabefläche in den Luftspalt und von dem Luftspalt in die elektrooptische Anzeige unerwünschte und störende Reflexionen auftreten. Aufgabe der Erfindung ist es daher, einen Touchscreen mit einer haptischen Rückmeldevorrichtung anzugeben der zum einen gute optische Eigenschaften aufweist und der zum anderen eine nicht allzu aufwendige Mechanik für die relative Bewegung zwischen der Eingabefläche und dem Träger erfordert.

Diese Aufgabe wird durch einen Touchscreen gemäß Anspruch 1 gelöst, in dem die Lichtquelle unbeweglich mit dem Träger verbunden ist. Insbesondere wenn die Lichtquelle einen Kühlkörper benötigt, um überflüssige Wärmeenergie abzuleiten, wird hierdurch eine beträchtliche Einsparung an zu bewegender Masse erreicht, ohne die optischen Eigenschaften des Touchscreens zu verschlechtern.

Wenn die Eingabefläche mit der elektrooptischen Anzeige verklebt ist, werden besonders gute optische Eigenschaften des Touchscreens erzeugt, insbesondere wenn als Klebstoff eine so genannte optical bonding Masse verwendet wird. Derartige Klebstoffe enthalten beispielsweise transparente Silikone oder Acrylate. Sofern die Eingabefläche aus Glas besteht, ist insbesondere ein Silikonkleber vorteilhaft, da er nahezu die gleichen optischen Eigenschaften wie Glas aufweist.

Wenn die Lichtquelle eine Leuchtdiode aufweist, wird ein Großteil der der Leuchtdiode elektrisch zugeführten Energie in Licht umgesetzt. So wird zum einen wenig Energie benötigt und zum zweiten muss nur wenig Verlust Energie abgeführt werden. Als Lichtquellen sind aber auch andere Lichtquellen wie beispielsweise Glühlampen oder Leuchtstofflampen möglich.

Die erfindungsgemäße Beleuchtungsvorrichtung ist ausgestaltet, Licht von der Lichtquelle in einen Lichtleiter einzukoppeln, wobei der Lichtleiter mit der elektrooptischen Anzeige starr verbunden ist und der Lichtleiter ausgestaltet ist, Licht in die elektrooptische Anzeige einzukoppeln. Dabei wird eine gute gleichmäßige Ausleuchtung der elektrooptischen Anzeige erreicht, ohne dass die zu bewegende Masse wesentlich erhöht wird, da der Lichtleiter eine geringe Dicke und damit eine geringe Masse aufweisen kann.

Zwischen dem Lichtleiter und der elektrooptischen Anzeige können bei sämtlichen vorgenannten Ausgestaltungen noch sogenannte Lichtmanagement-Folien Verwendung finden, um eine noch gleichmäßigere Verteilung des Lichtes sicherstellen zu können, sofern die gewünschte Lichtverteilung durch den Lichtleiter alleine nicht realisierbar ist.

Wenn der Träger als Gehäuse ausgestaltet ist, kann auf einfache Weise der Touchscreen vor unerwünschten Verschmutzungen innerhalb des Gehäuses geschützt werden.

Wenn zwischen dem Gehäuse und der Eingabefläche eine Dichtung angeordnet ist, kann eine Verschmutzung des Innenraums des Touchscreen noch besser verhindert werden.

Wenn die Dichtung elastisch ausgestaltet ist, ist sie auf einfache Art und Weise realisierbar. Es ist aber beispielsweise auch möglich eine Dichtung in Form von ineinandergreifenden Kulissen vorzusehen, die gegeneinander verschieblich angeordnet sind.

Wenn die Eingabefläche gebogen ist, kann eine besonders wertige Anmutung des Touchscreens realisiert werden. Außerdem ist eine Einfügung beispielsweise in eine Mittelkonsole eines Kraftfahrzeuges gestalterisch einfacher und ansprechender realisierbar.

Wenn auch zusätzlich zu der Eingabefläche die elektrooptische Anzeige gebogen ist, ist eine unverzerrte Darstellung und Informationen auf der elektrooptischen Anzeige einfacher realisierbar.

Die Erfindung wird nachfolgend anhand der Figuren näher erläutert. Es zeigen:
- Figur 1: einen Querschnitt durch einen Touchscreen, der hilfreich zum Verständnis der Erfindung ist,

- Figur 2: einen Querschnitt durch ein besonders bevorzugtes Ausführungsbeispiel eines erfindungsgemäßen Touchscreens,
- Figur 3: einen Teilquerschnitt durch einen nicht erfindungsgemäßen Touchscreen mit besonders bevorzugten Dichtungen.

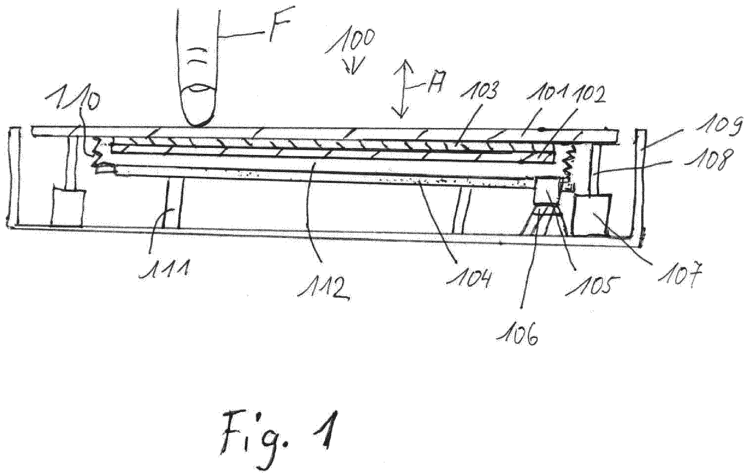

In Figur 1 erkennt man einen Touchscreen 100, der nicht erfindungsgemäß ist. Er weist eine Eingabefläche 101, eine elektrooptische Anzeige 102, eine Verklebung 103, einen Lichtleiter 104, eine Lichtquelle 105 in Form einer Leuchtdiode, einen Kühlkörper 106, zwei Motoren 107, zwei Verbindungen 108, einen Träger 109 in Form eines Gehäuses, zwei Dichtungen 110, zwei Verbindungselemente 111 und einen Luftspalt 112 auf. Weiterhin ist ein Teil eines Fingers F eines ansonsten nicht dargestellten Benutzers des erfindungsgemäßen Touchscreens und ein Doppelpfeil A zu sehen. Die Eingabefläche 101 ist mit der elektrooptischen Anzeige 102 mittels der Verklebung 103 verbunden. Diese Verklebung kann insbesondere in Form eines Optical Bonding ausgestaltet sein. Der Lichtleiter 104 ist über die Verbindungselemente 111 starr mit dem Träger 109 verbunden, ebenso ist die Lichtquelle 105 über den Kühlkörper 106 starr mit dem Träger 109 verbunden. Licht der Lichtquelle 105 wird in den Lichtleiter 104 eingekoppelt und von diesem in Richtung der elektrooptischen Anzeige 102 ausgekoppelt. Zwischen dem Lichtleiter 104 und der elektrooptischen Anzeige 102 können in Figur 1 noch sogenannte Lichtmanagementfolien vorhanden sein, um eine Verteilung des Lichts gegebenenfalls noch zu verbessern. Die Dichtungen 110 verhindern, dass Verschmutzungen insbesondere im Bereich des Luftspalts 112 auftreten. Die Motoren 107 bewegen die Eingabefläche 101 über die Verbindungen 108 in eine Richtung senkrecht zur Oberfläche der Eingabefläche 101, wie durch den Doppelpfeil A dargestellt. Durch diese Bewegung wird ein taktiles Feedback in dem Finger F eines Benutzers des Touchscreens 100 erzeugt.

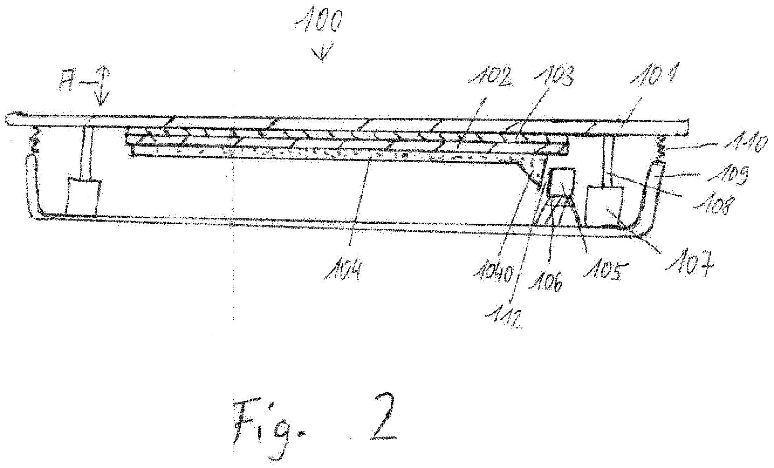

Der erfindungsgemäße Touchscreen 100 in Figur 2 unterscheidet sich gegenüber dem in Figur 1 dargestellten Touchscreen hauptsächlich dadurch, dass der Lichtleiter 104 direkt an der elektrooptischen Anzeige 102 befestigt ist, beispielsweise durch Kleben. Die Lichtquelle 105 ist ebenfalls wie bei dem Touchscreen in Figur 1 über den Kühlkörper 106 mit dem Träger 109 starr verbunden. Es ist auch möglich, die Lichtquelle 105 andersartig mit dem Träger 109 zu verbinden, beispielsweise direkt mit dem Träger 109 oder aber auf einer nicht dargestellten Leiterplatte, die fest mit dem Träger 109 verbunden ist und den Kühlkörper entweder weg zu lassen oder sofern seine Kühlleistung benötigt wird den Kühlkörper seitlich oder oberhalb der Lichtquelle 105 vorzusehen. Der Lichtleiter 104 weist einen besonderen Einkoppelbereich 1040 auf, in den das Licht der Lichtquelle 105 unabhängig von der gerade eingenommenen Position der Eingabefläche 101 und damit auch des Lichtleiters 104 eingekoppelt werden kann. Im Ausführungsbeispiel nach Figur zwei befindet sich zwischen dem Einkoppelbereich 1040 und der Lichtquelle 105 ein Luftspalt 112. Bei entsprechend genauer Ausgestaltung der Bewegung der Eingabefläche 101 durch die Motoren 107 und entsprechender Führung kann auf den Luftspalt 112 verzichtet werden. Weiterhin unterscheidet sich das Ausführungsbeispiel in Figur 2 gegenüber dem Touchscreen in Figur 1 dadurch, dass die Eingabefläche 101 den Träger 109 in Form eines Gehäuses vollständig überdeckt, so dass ein Beobachter des Touchscreens den Träger 109 nicht wahrnehmen kann und so ein wertigerer Eindruck des Touchscreens 100 erzeugt wird. Die Dichtungen 110 sind zwischen dem Träger 109 und der Eingabefläche 101 angeordnet.

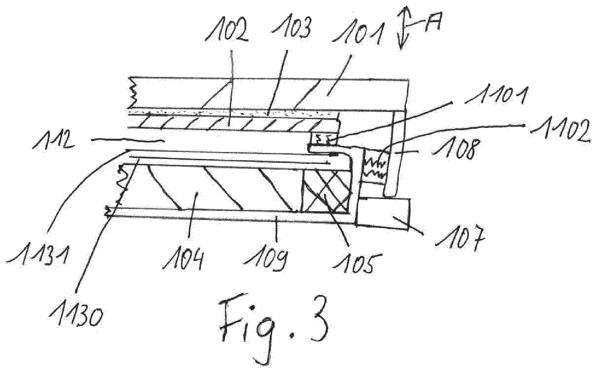

In Figur 3 ist der Teilquerschnitt eines Touchscreens dargestellt, der nicht erfindungsgemäß ist. Man erkennt einen Teil der Eingabefläche 101, einen Teil der elektrooptischen Anzeige 102, einen Teil der Verklebung 103, einen Teil des Lichtleiters 104, die Lichtquelle 105, einen Motor 107, eine Verbindung 108, einen Träger 109, eine Dichtung 1101, eine Dichtung 1102 und zwei Lichtmanagementfolien 1130, 1131. Der Lichtleiter 104 und die Lichtquelle 105 sind direkt auf dem unteren Teil des Trägers 109 angeordnet und befestigt, auf einen Kühlkörper für die Lichtquelle 105 wurde verzichtet. Die Lichtmanagementfolien 1130, 1131 sind zwischen dem Luftspalt 112 und dem Lichtleiter 104 auf dem Lichtleiter 104 angeordnet. Eine Dichtung 1101 besteht aus einer schaumartigen Folie, die elastisch in Normalenrichtung komprimierter ist und eine Dichtung 1102 besteht aus einer schaumartigen Folie, die elastisch in lateraler Richtung komprimierter ist.

Die Erfindung kann auch in einem Touchscreen Verwendung finden, bei dem die Bewegung der Eingabefläche parallel zu ihrer Oberfläche ausgestaltet ist. Dies muss dann bei der Übertragung des Lichts von der Lichtquelle über den Lichtleiter in die elektrooptische Anzeige beachtet werden. Auch bei dieser Ausgestaltung ist es möglich, den Lichtleiter entweder direkt an der elektrooptischen Anzeige zu befestigen und somit während der Bewegung der Eingabefläche mit zu bewegen oder aber den Lichtleiter starr direkt oder indirekt mit dem Träger zu verbinden und dann das Licht gegebenenfalls über einen Luftspalt in die elektrooptische Anzeige einzukoppeln.

Bei allen Ausgestaltungen können zwischen dem Lichtleiter und der elektrooptischen Anzeige eine oder mehrere Lichtmanagementfolien angeordnet sein, um die Verteilung des Lichts noch zusätzlich zu vergleichmäßigen, sofern es durch eine entsprechende Ausgestaltung des Lichtleiters wie beispielsweise Aufrauhungen, in dem Lichtleiter realisierte abgewinkelte Abschnitte oder in den Lichtleiter eingebrachte Fremdkörper, beispielsweise Mikroluftblasen oder sonstige Mikropartikel, erforderlich ist.

## Patentansprüche

1. Touchscreen (100) mit einer haptischen Rückmeldevorrichtung (107, 108), aufweisend eine elektrooptische Anzeige (102) mit einer vor der elektrooptischen Anzeige angeordneten Eingabefläche (101) und einen Träger (109), wobei die elektrooptische Anzeige (102) mit der Eingabefläche (101) mechanisch starr verbunden ist und die Eingabefläche (101) relativ zu dem Träger (109) durch einen Motor (107) beweglich ausgestaltet ist, wobei die elektrooptische Anzeige (102) mittels einer Beleuchtungsvorrichtung (105, 104) beleuchtbar ist, wobei die Beleuchtungsvorrichtung (105, 104) eine Lichtquelle (105) aufweist, wobei die Lichtquelle (105) unbeweglich mit dem Träger (109) verbunden ist, **dadurch gekennzeichnet, dass** die Beleuchtungsvorrichtung (105) einen Lichtleiter (104) aufweist und ausgestaltet ist, Licht von der Lichtquelle in den Lichtleiter (104) einzukoppeln, wobei der Lichtleiter (104) mit der elektrooptischen Anzeige (102) starr verbunden ist und der Lichtleiter (104) ausgestaltet ist, das Licht direkt oder über mindestens eine Lichtmanagementfolie (1130, 1131) in die elektrooptische Anzeige (102) auszukoppeln.

2. Touchscreen (100) nach Patentanspruch 1, **dadurch gekennzeichnet, dass** die Eingabefläche (101) mit der elektrooptischen Anzeige (102) verklebt ist.

3. Touchscreen (100) nach einem der vorstehenden Patentansprüche, **dadurch gekennzeichnet, dass** die Lichtquelle (105) thermisch mit einer Kühlvorrichtung verbunden ist.

4. Touchscreen (100) nach einem der vorstehenden Patentansprüche, **dadurch gekennzeichnet, dass** die Lichtquelle (105) eine Leuchtdiode aufweist.

5. Touchscreen (100) nach einem der vorstehenden Patentansprüche, **dadurch gekennzeichnet, dass** der Träger (109) als Gehäuse ausgestaltet ist.

6. Touchscreen (100) nach Patentanspruch 5, **dadurch gekennzeichnet, dass** zwischen dem Gehäuse und der Eingabefläche eine Dichtung (110) angeordnet ist.

7. Touchscreen (100) nach Patentanspruch 6, **dadurch gekennzeichnet, dass** die Dichtung (110) elastisch ausgestaltet ist.

8. Touchscreen (100) nach einem der vorstehenden Patentansprüche, **dadurch gekennzeichnet, dass** die Eingabefläche (101) gebogen ist.

9. Touchscreen nach Patentanspruch 8, **dadurch gekennzeichnet, dass** die elektrooptische Anzeige (102) gebogen ist.

## Claims

1. Touchscreen (100) having a haptic feedback device (107; 108), comprising an electrooptical display (102) with an input area (101), arranged in front of the electrooptical display, and a carrier (109), the electrooptical display (102) being mechanically connected rigidly to the input area (101) and the input area (101) being designed to be movable in relation to the carrier (109) by means of a motor (107), the electrooptical display (102) being able to be illuminated by means of an illuminating device (105, 104), the illuminating device (105, 104) comprising a light source (105), the light source (105) being connected immovably to the carrier (109), **characterized in that** the illuminating device (105) comprises a light guide (104) and is designed to couple light from the light source into the light guide (104), the light guide (104) being rigidly connected to the electrooptical display (102) and the light guide (104) being designed to couple out the light into the electrooptical display (102) directly or by way of at least one light management film (1130, 1131).

2. Touchscreen (100) according to Patent Claim 1, **characterized in that** the input area (101) is adhesively bonded to the electrooptical display (102).

3. Touchscreen (100) according to either of the preceding patent claims, **characterized in that** the light source (105) is thermally connected to a cooling device.

4. Touchscreen (100) according to one of the preceding patent claims, **characterized in that** the light source (105) comprises a light-emitting diode.

5. Touchscreen (100) according to one of the preceding patent claims, **characterized in that** the carrier (109) is designed as a housing.

6. Touchscreen (100) according to Patent Claim 5, **characterized in that** a seal (110) is arranged between the housing and the input area.

7. Touchscreen (100) according to Patent Claim 6, **characterized in that** the seal (110) is elastically designed.

8. Touchscreen (100) according to one of the preceding patent claims, **characterized in that** the input area (101) is curved.

9. Touchscreen according to Patent Claim 8, **characterized in that** the electrooptical display (102) is curved.

## Revendications

1. Ecran tactile (100) doté d'un dispositif de retour haptique (107, 108), présentant un affichage électrooptique (102) avec une face d'entrée (101) disposée avant l'affichage électrooptique et un support (109), dans lequel l'affichage électrooptique (102) est assemblé mécaniquement de façon rigide à la face d'entrée (101) et la face d'entrée (101) est rendue mobile par rapport au support (109) au moyen d'un moteur (107), dans lequel l'affichage électrooptique (102) peut être éclairé au moyen d'un dispositif d'éclairage (105, 104), dans lequel le dispositif d'éclairage (105, 104) présente une source de lumière (105), dans lequel la source de lumière (105) est assemblée de façon immobile au support (109), **caractérisé en ce que** le dispositif d'éclairage (105) présente une fibre optique (104) et est configuré pour coupler la lumière de la source de lumière dans la fibre optique (104), dans lequel la fibre optique (104) est rigidement assemblée à l'affichage électrooptique (102) et la fibre optique (104) est configurée pour découpler la lumière directement ou via au moins un film de gestion de lumière (1130, 1131) dans l'affichage électrooptique (102).

2. Ecran tactile (100) selon la revendication 1, **caractérisé en ce que** la face d'entrée (101) est collée avec l'affichage électrooptique (102).

3. Ecran tactile (100) selon l'une quelconque des revendications précédentes, **caractérisé en ce que** la source de lumière (105) est thermiquement assemblée à un dispositif de refroidissement.

4. Ecran tactile (100) selon l'une quelconque des revendications précédentes, **caractérisé en ce que** la source de lumière (105) présente une diode électroluminescente.

5. Ecran tactile (100) selon l'une quelconque des revendications précédentes, **caractérisé en ce que** le support (109) est réalisé en forme de boîtier.

6. Ecran tactile (100) selon la revendication 5, **caractérisé en ce qu'**un joint d'étanchéité (110) est disposé entre le boîtier et la face d'entrée.

7. Ecran tactile (100) selon la revendication 6, **caractérisé en ce que** le joint d'étanchéité (110) est élastique.

8. Ecran tactile (100) selon l'une quelconque des revendications précédentes, **caractérisé en ce que** la face d'entrée (101) est courbe.

9. Ecran tactile selon la revendication 8, **caractérisé en ce que** l'affichage électrooptique (102) est courbe.
